# EUROPEAN PATENT SPECIFICATION

(11) **EP 2 669 067 B1**
(45) Date of publication and mention of the grant of the patent: **11.05.2016**
(21) Application number: 12739410.4
(22) Date of filing: 16.01.2012
(51) Int. Cl.: B28B 11/02, B01D 39/20, B28B 11/00, B29D 99/00

(54) **SEALING DEVICE AND METHOD FOR PRODUCING HONEYCOMB STRUCTURE**
DICHTUNGSVORRICHTUNG UND -VERFAHREN ZUR HERSTELLUNG EINER WABENSTRUKTUR
DISPOSITIF DE SCELLEMENT, ET PROCÉDÉ DE FABRICATION DE STRUCTURE EN NID D'ABEILLES

(30) Priority: 27.01.2011 JP 2011015632
(43) Date of publication of application: 04.12.2013
(73) Proprietor: Sumitomo Chemical Company Limited, Tokyo 104-8260 (JP)
(72) Inventor: MORI Masaharu, Niihama-shi Ehime 792-8521 (JP); GONG Ying, Niihama-shi Ehime 792-8521 (JP)
(74) Representative: Vossius & Partner Patentanwälte Rechtsanwälte mbB
(86) International application number: PCT/JP2012/050747
(87) International publication number: WO 2012/102116

(56) References cited:
- WO-A1-2006/062141
- WO-A1-2011/122635
- DE-A1-102007 000 412
- JP-A- 2007 269 007
- JP-A- 2009 006 628
- JP-A- 2011 224 984

## Description

### Technical Field

The present invention relates to a plugging device and a method for producing a honeycomb structure.

### Background Art

Conventionally, a honeycomb filter structure has been widely known to be used for a DPF (Diesel particulate filter), and the like. This honeycomb filter structure has a structure in which one end sides of a part of through holes of a honeycomb structure having a number of through holes are plugged by a plugging material, and that other end sides of the remaining through holes are sealed by the plugging material. Additionally, a method for producing such honeycomb filter structure is disclosed in JP 63-24731 (Patent Publication). In JP 63-24731, a plugging material is pressed against one end of a honeycomb structure 1 arranged in a cylinder 7 by a piston 8, and thereby the plugging material is supplied to ends of through holes of the honeycomb structure.

JP-A-2007-269007 discloses a means to make the thickness of ceramic slurry in a container uniform in a process to form plugged portions in a honeycomb structure.

### Summary of Invention

### Technical Problem

However, with a conventional method, uniformity of a plugging length of the plugging material in each through hole is not sufficient.

The present invention has been made in view of the above-described problem, and an object thereof is to provide a plugging device and a method for producing a honeycomb filter, superior in uniformity of a plugging length.

### Solution to Problem

The problem is solved by the features of the independent claims. Further details of the invention are defined in the dependent claims.

A plugging device pertaining to the present invention is provided with: a body that has a depressed portion and a communication path opened to an inner surface of the depressed portion; an elastic plate arranged at the body so as to cover the depressed portion; a bearing that supports the body rotatably around an axis; and a rotary drive unit that rotates the body around the axis.

According to the present invention, a plugging material can be supplied to through holes of a honeycomb structure by the following procedure. First, the elastic plate is deformed along the depressed portion of the body by discharging a fluid in the depressed portion of the body through the communication path, and the depressed portion of the elastic plate is formed. Next, the plugging material is supplied in the depressed portion of the elastic body. Subsequently, the body is rotated around the axis by the rotary drive unit. As a result of this, the plugging material can be spread in the depressed portion. Subsequently, one end surface of the honeycomb structure is arranged at a position opposed to the depressed portion. Subsequently, the elastic plate is moved toward the one end surface of the honeycomb structure by supplying the fluid between the body and the elastic plate through the communication path. As a result of this, the plugging material in the depressed portion of the elastic plate is supplied in the through holes of the honeycomb structure.

After that, the elastic plate can also be deformed into a raised shape in an opposite direction to the depressed portion of the body by further supplying the fluid between the body and the elastic plate through the communication path. As a result of this, the honeycomb structure can be easily pulled apart from the body.

Here, the axis is preferably a vertical axis. In this case, when a viscosity of the plugging material is low, the plugging material can be suitably spread in the depressed portion.

In addition, the axis is also preferably an axis inclined to a vertical, or a horizontal axis. When the viscosity of the plugging material is high, an effect of the gravity can also be utilized by setting the axis as the inclined axis or the horizontal axis, and the plugging material can be spread more suitably in the depressed portion.

In addition, the axis preferably intersects with a bottom surface of the depressed portion, and the axis more preferably intersects with a center of the bottom surface of the depressed portion.

In addition, the axis preferably intersects with the bottom surface of the depressed portion at a right angle.

Here, the plugging device is further provided with a pipe that extends along the axis and is connected to the communication path, and the bearing is preferably a rotary joint connected to the pipe.

By employing the above, since the body can be rotated with the pipe being as an axis and further, can be connected outside through the pipe and the rotary joint, it is easy to take in and out of the fluid through the communication path. In this case, particularly, the plugging device is further preferably provided with a fluid supply and discharge unit that is connected to the rotary joint, supplies the fluid to the depressed portion through the communication path, and discharges the fluid in the depressed portion through the communication path.

In addition, the plugging device is further preferably provided with an auxiliary bearing that is fixed to the body and supports the body rotatably around the axis. In this case, the body can be rotated more smoothly.

In addition, the elastic plate is preferably a rubber plate.

A method for producing a honeycomb structure that has a plurality of through holes whose ends have been sealed pertaining to the present invention is provided with the steps of:
preparing an elastic plate arranged so as to cover a depressed portion with respect to a body that has the depressed portion and a communication path opened to an inner surface of the depressed portion;
forming a depressed portion of the elastic plate by discharging a fluid in the depressed portion through the communication path;
supplying a plugging material in the depressed portion of the elastic plate;
rotating around an axis the body to which the plugging material has been supplied;
arranging one end surface of the honeycomb structure that has the plurality of through holes, at a position opposed to the depressed portion; and
after the step of rotating, moving the elastic plate toward the one end surface of the honeycomb structure by supplying a fluid between the body and the elastic plate through the communication path.

### Advantageous Effects of Invention

According to the present invention, the plugging device superior in uniformity of a plugging length, and the like are provided.

### Brief Description of Drawings

[Figure. 1] Figure 1 is a schematic cross-sectional view of a plugging device pertaining to one embodiment of the present invention.
[Figure 2] Figure 2 is a view taken in the direction of arrows II-II of the plugging device of Figure 1.
[Figure 3] Figure 3(a) is a perspective view of a honeycomb structure used in the plugging device of Figure 1, and Figure 3(b) is a partially enlarged view of Figure 3(a).
[Figure 4] Figure 4(a) is a perspective view of a mask of Figure 1, and Figure 4(b) is a partially enlarged view of Figure 4(a).
[Figure 5] Figure 5(a) is a partial cross-sectional view illustrating operation of the plugging device of Figure 1, and Figure 5(b) is a partial cross-sectional view subsequent to Figure 5(a).
[Figure 6] Figure 6(a) is a partial cross-sectional view subsequent to Figure 5(b), and Figure 6(b) is a partial cross-sectional view subsequent to Figure 6(a).
[Figure 7] Figure 7(a) is a partial cross-sectional view subsequent to Figure 6(b), and Figure 7(b) is a partial cross-sectional view subsequent to Figure 7(a).
[Figure 8] Figure 8(a) is a partial cross-sectional view subsequent to Figure 7(b), and Figure 8(b) is a partial cross-sectional view subsequent to Figure 7(a).
[Figure 9] Figure 9(a) is a schematic cross-sectional view of another aspect of the plugging device, and Figure 9(b) is a schematic cross-sectional view of a still other aspect of the plugging device.

### Description of Embodiments

A preferred embodiment of a plugging device pertaining to the present invention will be described with reference to drawings. It is to be noted that in a description, the same symbol is used for the same component or a component having the same function, and a duplicate description will be omitted.

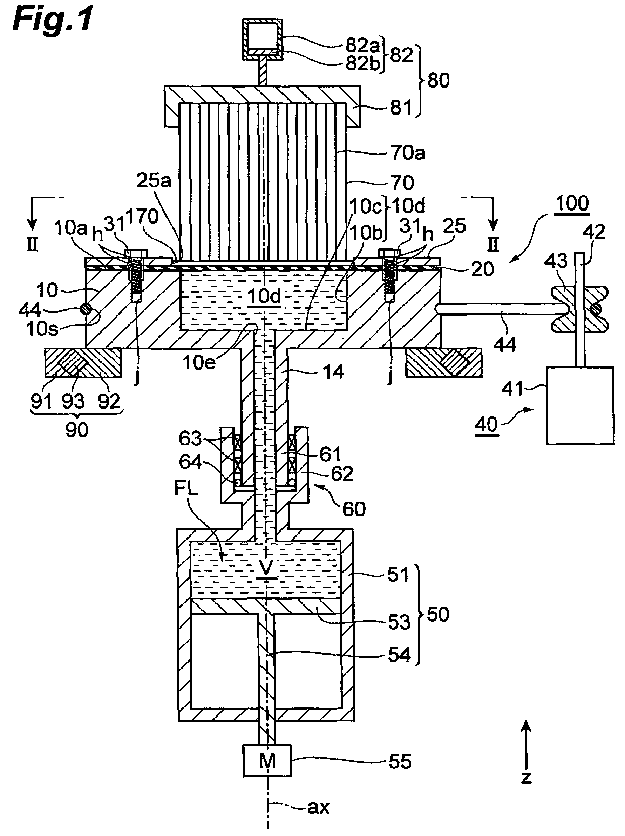

Figure 1 is a schematic cross-sectional view of a plugging device 100 pertaining to one example of the embodiment. The plugging device 100 pertaining to the embodiment is mainly provided with: a body 10; an elastic plate 20; a pump (fluid supply and discharge control unit) 50; a rotary joint (bearing) 60; a cross roller bearing (auxiliary bearing) 90; a holding unit 80; and a rotary drive unit 40.

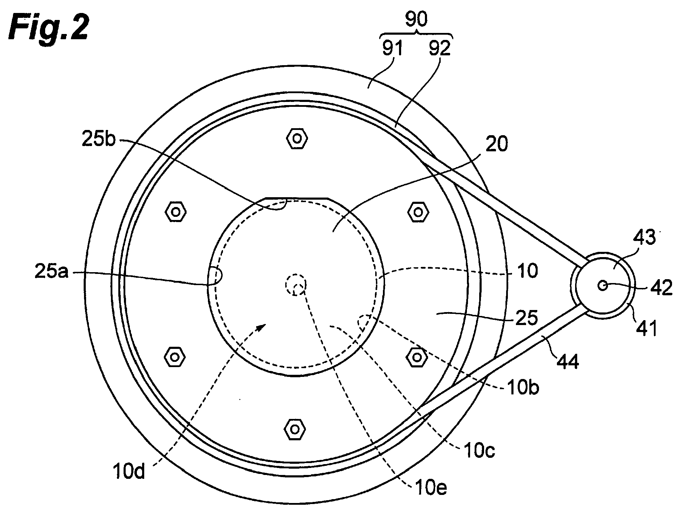

The body 10 is formed of a rigid material. Metal, such as stainless steel, and polymeric materials, such as fiber-reinforced plastic, are included as the rigid material. A depressed portion 10d is formed in a top surface 10a of the body 10. In the embodiment, a shape of the depressed portion 10d is set to be a cylindrical one as shown in Figures 1 and 2. Additionally, a side surface 10b of the depressed portion 10d is set to be perpendicular to the top surface 10a of the body 10, and a bottom surface 10c of the depressed portion 10d is set to be parallel thereto. A diameter of the depressed portion 10d can be set, for example, as 100 to 320 mm. A depth of the depressed portion 10d can be set, for example, as 0.2 to 20 mm. A groove 10s for hanging a belt 44, which will be mentioned later, is formed in a peripheral direction on an outer peripheral surface of the body.

The elastic plate 20 is arranged on the top surface 10a of the body 10 so as to cover an opening surface of the depressed portion 10d. The elastic plate 20 has elasticity, and can be easily deformed. A rubber plate is preferable as the elastic plate 20. Examples of rubber include natural rubbers, and synthetic rubbers, such as styrene-butadiene rubber, butadiene rubber, butyl rubber, ethylene-propylene rubber, nitrile rubber, chloroprene rubber, and fluorine-containing rubber, silicone rubber, and polyurethane rubber. Although a thickness of the elastic plate 20 is not particularly limited, it can be, for example, set as 0.3 to 3.0 mm.

The elastic plate 20 is fixed to the body 10 by a ring member 25 and bolts 31. The ring member 25 has an opening 25a at a position corresponding to the depressed portion 10d of the body 10, and thereby is formed as an annular shape. Additionally, the ring member 25 is arranged on the elastic plate 20 so that a center (a portion opposed to the depressed portion 10d) in the elastic plate 20 is exposed. As a result of this, a peripheral portion of the elastic plate 20 is sandwiched between the body 10 and the ring member 25. Through holes h are formed in the ring member 25 and the elastic plate 20, respectively, screw holes j corresponding to these through holes h are formed in the body 10, the bolts 31 are arranged penetrating these through holes h, and are screwed into screw holes j to be fixed, and thereby the peripheral portion of the elastic plate 20 is fixed in close contact with a portion around the depressed portion 10d in the top surface 10a of the body 10.

As shown in Figures 1 and 2, an inner diameter of the opening 25a of the ring member 25 is preferably set to be larger than an inner diameter of the depressed portion 10d of the body 10.

The body 10 further has a communication path 10e opened to the bottom surface 10c of the depressed portion 10d. It is to be noted that although the communication path 10e is opened to the bottom surface 10c of the depressed portion 10d in the embodiment, it may just be opened to an inner surface of the depressed portion 10d, and may be, for example, opened to the side surface 10b of the depressed portion 10d. In addition, a shape and the number of the openings of the communication path 10e are not particularly limited, either.

A connecting pipe 14 that extends vertically downwardly is provided at the body 10. The connecting pipe 14 is communicated with the communication path 10e. A position of the connecting pipe (pipe) 14 is preferably a center of the depressed portion 10d when viewed from a top.

The rotary joint 60 (bearing) is provided at a lower end of the connecting pipe 14. As a result of this, the body 10 is supported rotatably around an axis of the connecting pipe 14, i.e., a vertical axis ax. The vertical axis ax extends in a vertical direction Z. The rotary joint 60 mainly has: an inner cylinder 61; an outer cylinder 62; a bearing 63; and a gasket 64. The vertical axis ax intersects with the bottom surface 10c of the depressed portion 10d. Preferably, the vertical axis ax passes through a center of the bottom surface 10c of the depressed portion 10d. The vertical axis ax preferably intersects with the bottom surface 10c at a right angle.

The inner cylinder 61 forms a lower end of the connecting pipe 14. The outer cylinder 62 is arranged so as to surround the inner cylinder 61 from outside. The bearing 63 is arranged between the inner cylinder 61 and the outer cylinder 62, and makes them mutually rotatable relatively around the vertical axis. The gasket 64 seals between the inner cylinder 61 and the outer cylinders 63, and suppresses leakage of a fluid or the like. The pump 50 is connected to the outer cylinder 62.

The pump 50 is provided with: a cylinder 51; a piston 53 arranged in the cylinder 51; and a piston rod 54 connected to the piston 53. A motor 55 that reciprocates the piston rod 54 in an axial direction is connected to the piston rod 54. It is to be noted that the piston rod 54 may be moved manually.

In the embodiment, a closed space V formed by the body 10, the connecting pipe 14, and the cylinder 51 is formed between the elastic plate 20 and the piston 53, and the closed space V is filled with a fluid FL. Although the fluid FL is not particularly limited, it is preferably a liquid and particularly, spindle oil or the like. It is to be noted that the fluid FL may be a gas, such as air. Additionally, the fluid FL can be discharged from an inside of the depressed portion 10d of the body 10 by moving the piston 53, and the fluid FL can also be supplied in the depressed portion 10d.

The holding unit 80 is provided on the body 10. The holding unit 80 has a holding fixture 81 that holds a honeycomb structure 70, and a pneumatic cylinder 82 to which the holding fixture 81 has been connected.

The holding fixture 81, as shown in Figure 1, holds the honeycomb structure 70 so that an opening surface of one side of through holes 70a is opposed to the elastic plate 20 and the depressed portion 10d.

The pneumatic cylinder 82 has a cylinder 82a that extends in a vertical direction, and a piston 82b provided in the cylinder 82a, and pressures on both vertical sides of the piston 82b can be adjusted by adjusting a pressure supplied from outside. Additionally, as a result of this, the pneumatic cylinder 82 can move the holding fixture 81 in a direction where the honeycomb structure 70 and the elastic plate 20 come close to each other and in a direction where they get away from each other, respectively. In addition, the pneumatic cylinder 82 can bring the honeycomb structure 70 into contact with a mask 170, which will be described later, by pressing the holding fixture 81 downwardly by a predetermined force according to a gas supply pressure in the front and the rear of the piston 82b. Furthermore, the pneumatic cylinder 82 can also allow the holding fixture 81 to freely move in the vertical direction by releasing the pressure in the front and the rear of the piston. Namely, the holding unit 80 can shift a state where the honeycomb structure 70 that the holding fixture 81 holds can be moved freely in the upward direction, and a state where the honeycomb structure 70 is fixed to the body 10.

The rotary drive unit 40 has: a motor 41 that has a rotary shaft 42; a pulley 43 fixed to the rotary shaft 42; and the belt 44 spanned between the pulley 43 and the groove 10s of the body 10. The body 10 can be rotated around the axis of the connecting pipe 14, i.e., the vertical axis by rotation of the motor 41.

Although a rotational speed of the body 10 is not particularly limited, it is preferably approximately 30 to 300 rpm. Although a rotation time is not particularly limited, either, it is preferably approximately 3 to 20 seconds.

The body 10 further has the cross roller bearing 90 (bearing) in order to assist that the body 10 rotates around the vertical axis of the connecting pipe 14. The cross roller bearing 90 has: an outer ring 91 fixed to a pedestal or the like that are not shown; an inner ring 92 fixed to the body 10; and a plurality of cylindrical rollers 93 arranged between the outer ring 91 and the inner ring 92.

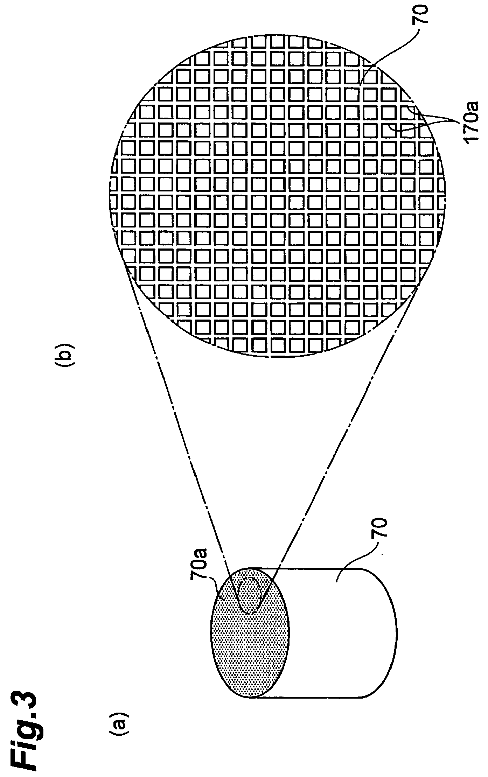

The honeycomb structure 70 as one example used in the embodiment is, as shown in Figure 3(a), a column body in which a number of through holes 70a have been arranged substantially in parallel with one another. A cross-sectional shape of the through hole 70a is, as shown in Figure 3(b), a square. The plurality of through holes 70a are arranged in a square form in the honeycomb structure 70 when viewed from an end surface, i.e., so that central axes of the through holes 70a are located at vertices of the squares, respectively. A size of the square of the cross section of the through hole 70a can be, for example, set as 0.8 to 2.5 mm on a side.

In addition, although a length of a direction where the through hole 70a of the honeycomb structure 70 extends is not particularly limited, it can be, for example, set as 40 to 350 mm. In addition, although an outer diameter of the honeycomb structure 70 is not particularly limited, either, it can be, for example, set as 100 to 320 mm.

Although a material of the honeycomb structure 70 is not particularly limited, it is preferably a ceramic material from a viewpoint of a high-temperature tolerance. For example, there are included oxides, such as alumina, silica, mullite, cordierite, glass, and aluminum titanate, silicon carbide, silicon nitride, metal, and the like. It is to be noted that aluminum titanate can further contain magnesium and/or silicon. Such honeycomb structure 70 is usually porous.

In addition, the honeycomb structure 70 may be a green molded body (an unfired molded body) that becomes the ceramic material as mentioned above by being fired later. The green molded body contains inorganic compound source powder that is a ceramic raw material, organic binders, such as methylcellulose, and an additive added if needed.

For example, in a case of a green molded body of aluminum titanate, inorganic compound source powder contains aluminum source powder, such as α alumina powder, and titanium source powder, such as anatase-type and rutile-type titania powder, and can further contain if needed magnesium source powder, such as magnesia powder and magnesia spinel powder, and/or silicon source powder, such as silicon oxide powder and glass frit.

Examples of the organic binder include celluloses, such as methylcellulose, carboxyl methylcellulose, and hydroxyalkyl methylcellulose, and sodium carboxyl methylcellulose; alcohols, such as polyvinyl alcohol; and lignin sulfonate.

Examples of the additive include: a pore-forming agent; a lubricant and a plasticizer; a dispersing agent; and a solvent.

Examples of the pore-forming agent include: carbon materials, such as graphite; resins, such as polyethylene, polypropylene, and polymethyl methacrylate; plant materials, such as starch, nut shells, walnut shells, and corn; ice; dry ice; and the like.

Examples of the lubricant and plasticizer include alcohols, such as glycerin; higher fatty acids, such as caprylic acid, lauric acid, palmitic acid, arachidic acid, oleic acid, and stearic acid; metal stearates, such as stearic acid Al; and the like.

Examples of the dispersing agent include inorganic acids, such as nitric acid, hydrochloric acid, and sulfuric acid; organic acids, such as oxalic acid, citric acid, acetic acid, malic acid, and lactic acid; alcohols, such as methanol, ethanol, and propanol; surfactants, such as ammonium polycarboxylic acid ammonium and polyoxyalkylene alkyl ether; and the like.

Examples of the solvent include alcohols, such as methanol, ethanol, butanol, and propanol; glycols, such as propylene glycol, polypropylene glycol, and ethylene glycol; water; and the like.

The mask 170 is arranged in the opening 25a of the ring member 25 on the elastic plate 20. A material of the mask 170 is not particularly limited, and there are, for example, included metal and resin.

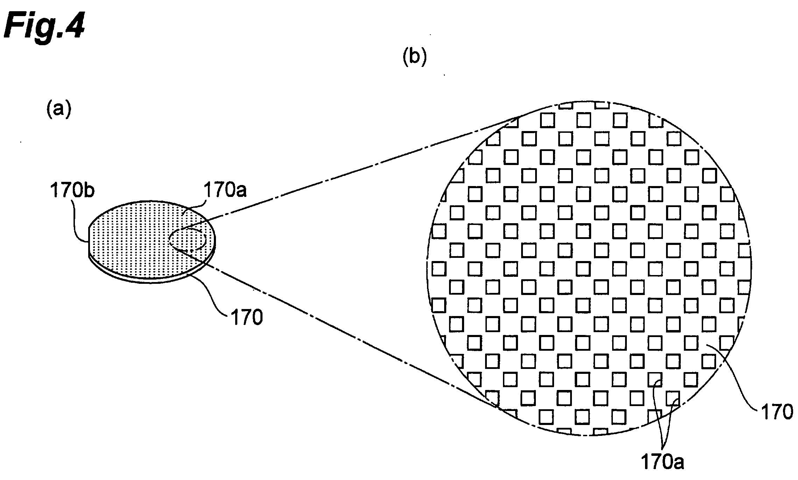

One example of the mask 170 used in the embodiment is shown in Figure 4(a). The mask 170 is a circular plate-like member, and has a number of through holes 170a that extends in a thickness direction. A cross-sectional shape of the through hole 170a is, as shown in Figure 4(b), a square corresponding to the through hole 70a (refer to Figure 3(b)) of the honeycomb structure 70. The plurality of through holes 170a are arranged in a staggered form as shown in Figure 4(b), and the each through hole 170a is arranged opposed to only a plurality of through holes 70ai having a relation where they are not mutually adjacent from side to side and up and down, among the plurality of through holes 70a arranged in the square form in Figure 3(b). It is to be noted that an orientation flat 170b is formed at the mask 170 in order to facilitate positioning of the through holes 170a of the mask 170, and that a projection 25b corresponding to the orientation flat may be provided also at the ring member 25 correspondingly. As shown in Figure 1, an outer diameter of the mask 170 is preferably set to be larger than the inner diameter of the depressed portion 10d of the body 10.

It is to be noted that a vibration exciter 140, such as an ultrasonic vibrator, may be provided at the body 10.

### (Method for use)

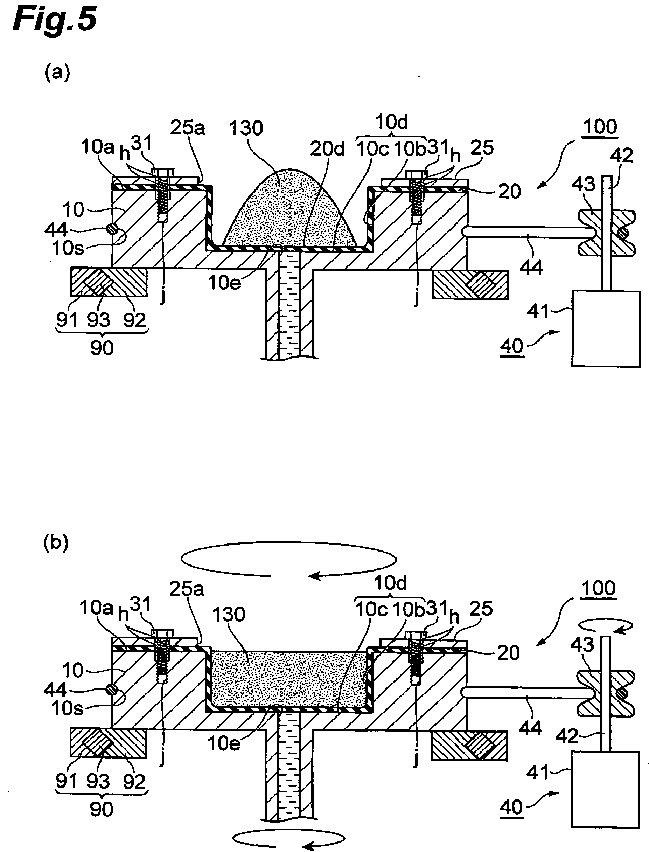

Subsequently, a method for using the above-mentioned plugging device 100 will be described. First, from a state of Figure 1, the pneumatic cylinder 82 is previously driven to upwardly pull up the holding fixture 81 that holds the honeycomb structure 70, and the mask 170 is removed from the elastic plate 20, and thereby the plugging device 100 is put into a state where the elastic plate 20 is arranged at the body 10 so as to cover the depressed portion 10d. Next, the fluid FL is made to discharge downwardly from the depressed portion 10d of the body 10 by pulling the piston 53 of the pump 50 downwardly. As a result of this, the elastic plate 20 deforms to be in close contact with the side surface 10b and the bottom surface 10c of the depressed portion 10d as shown in Figure 5(a), whereby a depressed portion 20d of the elastic plate 20 is formed.

Subsequently, a plugging material 130 is supplied in the depressed portion 20d of the elastic plate 20.

### (plugging material)

Although the plugging material 130 is not particularly limited as long as it can close the ends of the through holes 70a of the honeycomb structure 70, it is preferably a liquid. Examples of the plugging material include slurry that contains a ceramic material or a ceramic raw material, a binder, preferably a lubricant, and a solvent. Examples of the ceramic material include constituent materials of the above-mentioned honeycomb structure, and raw materials thereof.

Examples of the binder include organic binders: celluloses, such as methylcellulose, carboxyl methylcellulose, hydroxyalkyl methylcellulose and sodium carboxyl methylcellulose; alcohols, such as polyvinyl alcohol; lignin sulfonate; and the like. A used amount of the binder can be, for example, set as 0.1 to 10 mass% when the plugging material is set as 100 mass%.

Examples of the lubricant include alcohols, such as glycerin; higher fatty acids, such as caprylic acid, lauric acid, palmitic acid, alginic acid, oleic acid, and stearic acid; metal stearates, such as stearic acid Al; and the like. An additive amount of the lubricant is usually 0 to 10 mass% with respect to 100 mass% of the plugging material, and it is preferably 1 to 10 mass%, and more preferably 1 to 5 mass%.

Examples of the solvent include alcohols, such as methanol, ethanol, butanol, and propanol; glycols, such as propylene glycol, polypropylene glycol, and ethylene glycol; water; and the like. Among them, water is preferable, and ion exchanged water is more preferably used in terms of containing few impurities. A used amount of the solvent can be, for example, set as 15 to 40 mass% when the plugging material is set as 100 mass%.

A viscosity of the plugging material is preferably 5 to 50 Pa·s at 23°C in measurement by a coaxial double cylindrical method with a rotational viscometer.

When such plugging material 130 is supplied in the depressed portion 20d, usually, it does not spread very well in a horizontal direction in the depressed portion 20d as shown in Figure 5(a), and a thickness thereof is likely to be non-uniform. This becomes more obvious, when a solvent concentration is lowered to rapidly perform a step of drying the plugging material. When a plugging step is performed as it is, a length of the plugging portion becomes non-uniform, or poor plugging is likely to occur.

Consequently, the electric motor 41 of the rotary drive unit 40 is driven, and the body 10 is rotated. As a result of this, as shown in Figure 5(b), a centrifugal force is applied to the plugging material 130 in the horizontal direction, and the plugging material 130 can be spread in the whole depressed portion 20d. In addition, flatness of a surface of the plugging material 130 can also be enhanced.

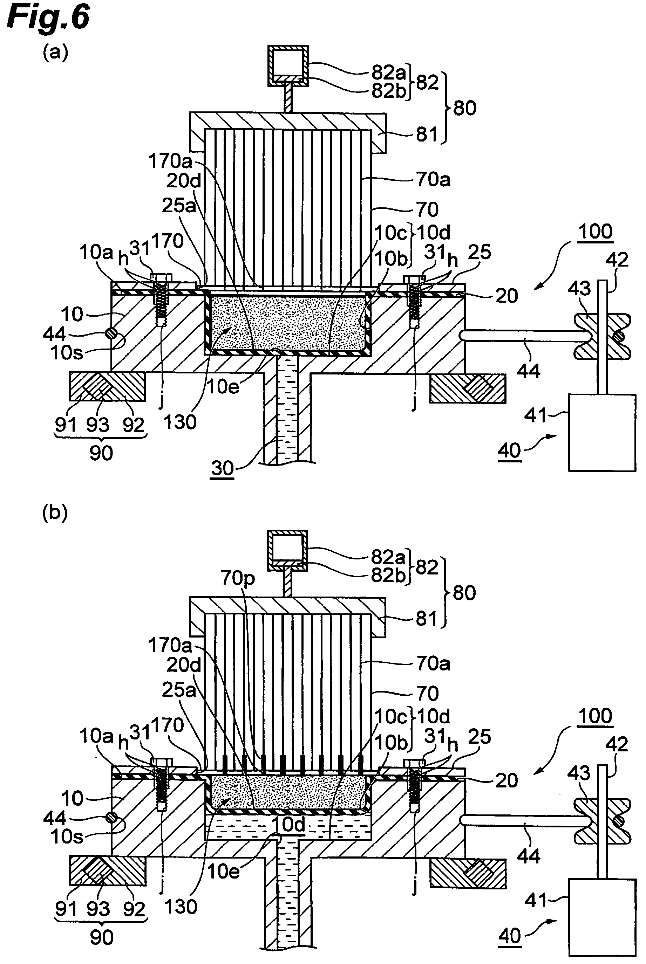

Subsequently, as shown in Figure 6(a), the mask 170 is set on the elastic plate 20 so as to cover the depressed portion 10d of the body 10 and next, the holding fixture 81 is moved downwardly by the pneumatic cylinder 82 to bring the honeycomb structure 70 into contact with the mask 170, whereby a part of the through holes 70a of the honeycomb structure 70 and the through holes 170a of the mask 170 are made to communicate with each other, the holding fixture 81 is further pressed downwardly by the pneumatic cylinder 82, and the honeycomb structure 70 is fixed to the mask 170 and the body 10.

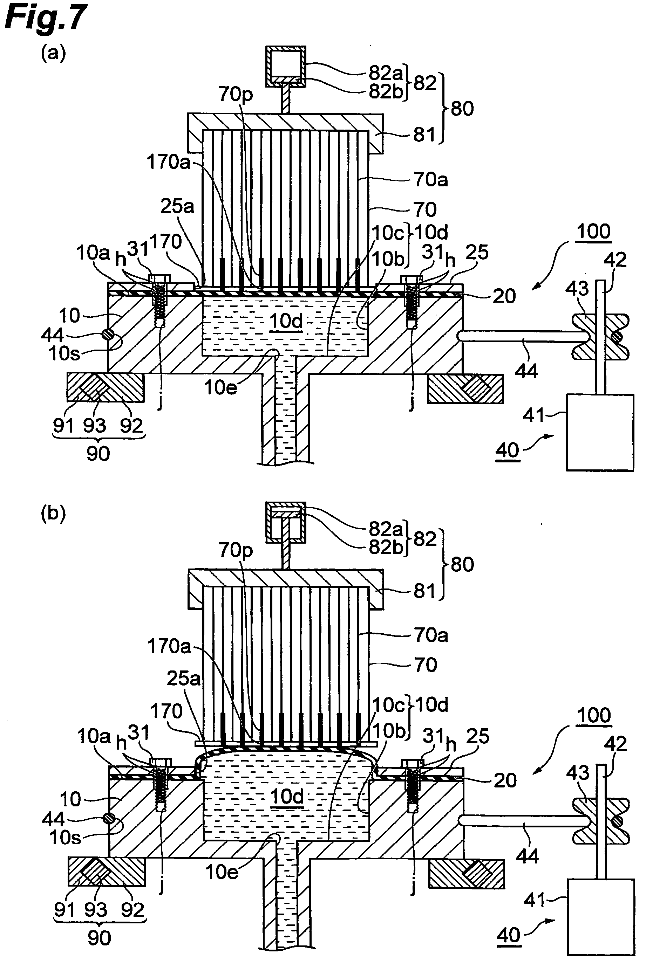

Next, the fluid FL is supplied between the depressed portion 10d and the elastic plate 20 through the communication path 10e by moving the piston of the pump 50 upwardly, and as a result of this, the elastic plate 20 moves toward the mask 170 as shown in Figure 6(b). The step is, as shown in Figure 7(a), preferably performed until the elastic plate 20 gets contact with the mask 170, and deformation of the elastic plate 20 is eliminated.

As a result of this, the plugging material 130 is supplied in the part of the through holes 70a of the honeycomb structure 70 through the through holes 170a of the mask 170, and a plugging portion 70p is formed.

Subsequently, after downward pressing of the honeycomb structure 70 by the pneumatic cylinder 82 is stopped to make the honeycomb structure 70 freely move upwardly, the piston 53 is further raised, and the fluid FL is further supplied between the elastic plate 20 and the body 10. As a result of this, as shown in Figure 7(b), the elastic plate 20 deforms into a raised shape in an upward direction, and the mask 170 and the honeycomb structure 70 move upwardly. At this time, since the peripheral portion of the elastic plate 20 that deforms into the raised shape is separated from the mask 170, as a result of this, the mask 170 and the honeycomb structure 70 can be easily pulled apart from the body 10. In this case, a production efficiency can be enhanced, and it becomes possible to produce the sealed honeycomb structure at low cost.

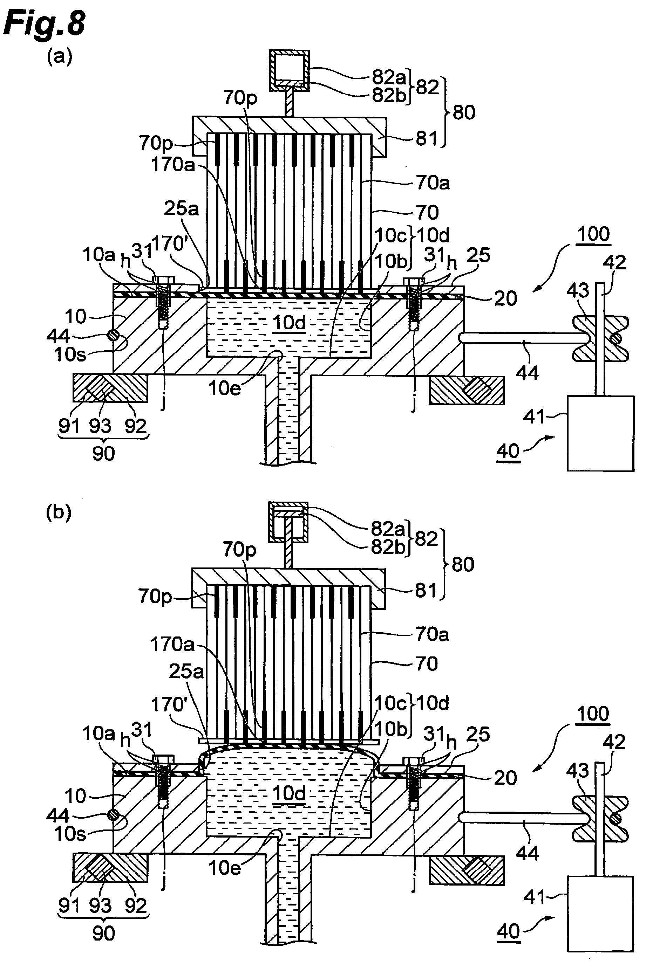

Subsequently, after removed from the holding fixture 81, the honeycomb structure 70 is again held by the holding fixture 81 in a state of being turned upside down. Next, similar operation is performed using a mask 170' having staggered arrangement in which arrangement of the through holes 170a is opposite to the mask 170. As a result of this, as shown in Figure 8(a), the other end side of the remaining through holes 70a is sealed by the plugging material, and the plugging portion 70p is formed. Subsequently, the mask 170' and the honeycomb structure 70 can be easily pulled apart from the body 10 and the elastic plate 20 by upwardly deforming the elastic plate 20 into the raised shape similarly to the above.

Additionally, a honeycomb filter can be produced by drying, firing, and the like the honeycomb structure 70 in which both ends of the through holes 70a have been sealed in a manner described above.

According to the present invention, the body 10 can be rotated by the rotary joint 60 and the rotary drive unit 40. Accordingly, the plugging material 130 supplied in the depressed portion 10d of the elastic plate 20 can be spread over the whole region in the depressed portion 10d. Accordingly, uniformity of the plugging length of the plugging material 170a in the each sealed through hole 70a of the honeycomb structure 70 can be enhanced.

In addition, since the rotary joint 60 is provided at the connecting pipe 14 in the embodiment, there is no need to perform work, such as removal of the pipe for supplying and discharging the fluid, before and after rotation of the body 10. Accordingly, a working time can be reduced.

Furthermore, since the plugging device 100 has the cross roller bearing 90 as the auxiliary bearing in the embodiment, the body 10 can be stably rotated even when it has a large weight.

It is to be noted that the present invention is not limited to the above-described embodiment, and various modified aspects can be employed.

For example, although the elastic plate 20 is fixed to the body 10 by the ring member 25 and the bolt 31 in the above-described embodiment, a method for fixing it is not particularly limited. For example, the elastic plate 20 may be fixed to the top surface 10a of the body 10 by an adhesive. In addition, the plugging device 100 has a configuration in which the elastic plate 20 can be easily exchanged.

In addition, although the rotary joint 60 and the cross roller bearing 90 respectively function as bearings that support the body 10 rotatably around the vertical axis in the above-described embodiment, the present invention is not limited to this and, for example, the plugging device 100 may have only the rotary joint 60, and may have only the cross roller bearing 90. In a case where the plugging device 100 does not have the rotary joint 60, for example, the communication path 10e is closed to maintain a reduced pressure after the fluid is discharged from the depressed portion 10d, and the communication path and the pump or the like are separated from one another, and the communication path 10e and the pump may just be connected to each other again after the end of rotation.

In addition, structures of the rotary joint 60 and the cross roller bearing 90 are not limited to the above-mentioned ones. In addition, it is needless to say that a bearing other than the rotary joint 60 and the cross roller bearing 90 may be used.

In addition, a configuration of the rotary drive unit 40 is not limited to the above-mentioned one, either, and various modes can be employed.

In addition, although a piston pump provided with the cylinder 51, the piston 53, and the piston rod 54 is employed as the pump 50 in the above-described embodiment, another component may be used as long as it can control supply and discharge of the fluid into/from the depressed portion 10d. For example, it may be a component having a valve that is connected to a pressure source and can control supply of a fluid from the pressure source, and a valve that is connected to a vacuum source of a vacuum pump or the like and can control discharge of the fluid to the vacuum source.

In addition, a shape of the depressed portion 10d is not particularly limited, and it can be appropriately set in accordance with the honeycomb structure 70 as a target to be sealed.

For example, a planar surface shape of the depressed portion 10d when viewed from a top can also be an oval, a rectangle, a square, or the like other than a circle. In this case, a size in a case of the rectangle or the square can be, for example, set as 50 to 300 mm on a side. In addition, there is no need for the side surface 10b to be perpendicular to the top surface 10a of the body 10, and for the bottom surface 10c to be parallel thereto, and for example, they may be inclined surfaces or may be curved surfaces.

In addition, although the bottom surface 10c is a horizontal flat surface in the above-described embodiment, it may not be the flat surface, i.e., may be a concave-convex surface, a surface having a groove, or the like.

In addition, although the holding unit 80 is provided with the pneumatic cylinder 82 in the above-described embodiment, the present invention is not limited to this and, for example, the holding unit 80 can be replaced with various mechanisms, such as a gear mechanism.

In addition, the holding unit 80 is not necessarily essential. For example, when the plugging material is supplied, the honeycomb structure may be fixed to the body 10 by placing a weight on the honeycomb structure 70, and in the honeycomb structure 70 being separated from the body, the weight may be removed to make the honeycomb structure movable. In addition, when the honeycomb structure has a certain level of weight, it is fixed by its own weight, and thus an aspect that does not have special fixing means can be employed.

A shape and a structure of the honeycomb structure 70 are not limited to the above, either. For example, an external shape of the honeycomb structure 70 may not be a cylinder, either and, for example, may be a prism, such as a quadratic prism. In addition, a cross-sectional shape of the through hole 70a of the honeycomb structure 70 may not be a square and, for example, can be a rectangle, a triangle, a polygonal shape, a circle, or the like. Furthermore, arrangement of the through holes 70a may not be square arrangement, either and, for example, may be triangular arrangement, staggered arrangement, or the like.

In addition, although the plate-like mask 170 having a number of through holes is employed in the above-described embodiment, a place shielded by the mask is also arbitrary. Furthermore, the present invention can be implemented without using such mask 170. For example, before plugging processing, insides of the part of the through holes 70a of the honeycomb structure 70 are plugged with a material that is decomposed when heated, and a plug may just be thermally decomposed, or the like after the through holes 70a are sealed. Even in a case where the mask is not used, the present invention has an effect in which the honeycomb structure 70 can be easily pulled apart from the body 10 and the elastic plate 20 by the elastic plate 20 that deforms into the raised shape after plugging processing.

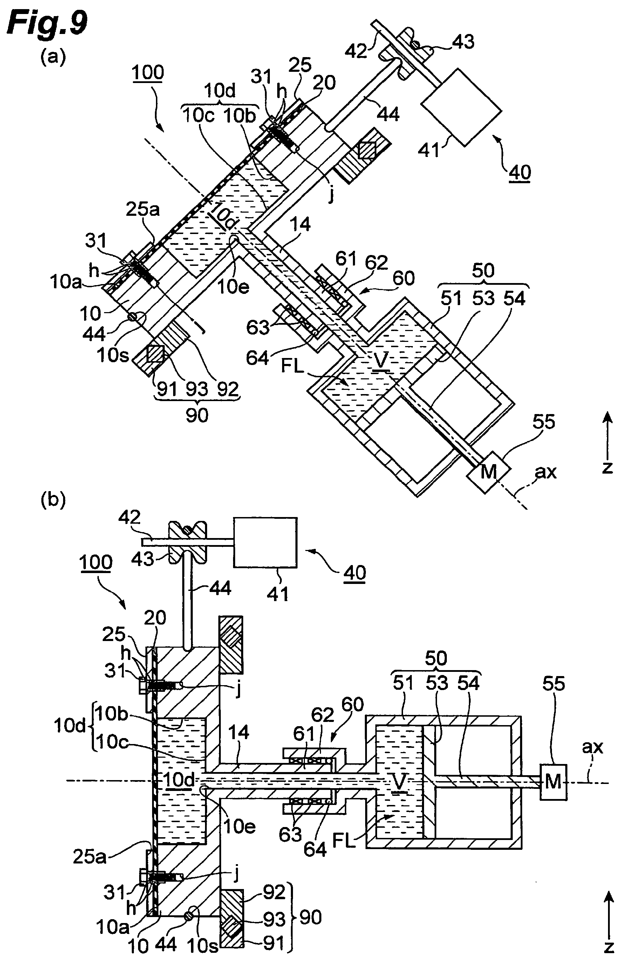

In addition, although in the above-described embodiment (refer to Figure 1), the bearing 60 supports the body 10 rotatably around the vertical axis ax, and the rotary drive unit 40 rotates the body 10 around the vertical axis ax, the present invention is not limited to this. For example, as shown in Figure 9(a), the bearing 90 may support the body 10 rotatably around an axis ax inclined to the vertical axis Z (less than 90 degrees), and the rotary drive unit 40 may rotate the body 10 around this inclined axis ax. In addition, for example, as shown in Figure 9(b), the bearing 90 may support the body 10 rotatably around a horizontal axis ax, and the rotary drive unit 40 may rotate the body 10 around this horizontal axis ax.

Modes of Figures 9(a) and 9(b) are the ones in which the whole plugging device 100 (the bottom surface 10c and the top surface 10c of the depressed portion are horizontal surfaces) of the aspect of Figure 1 is inclined, the bottom surface 10c and the top surface 10a of the depressed portion are set as inclined surfaces in Figure 9(a), and the bottom surface 10c and the top surface 10a of the depressed portion are set as vertical surfaces in Figure 9(b).

The plugging device using such inclined axis or horizontal axis is particularly suitable for a case of using a plugging material with a high viscosity, for example, approximately 10 to 50 Pa·s, and can exert an effect of spreading a paste of the plugging material in the depressed portion also by the gravity in addition to the centrifugal force.

### Reference Signs List

10 ... Body, 10e ... Communication path, 14 ... Connecting pipe (Pipe), 20 ... Elastic plate, 30 ... Depressed portion, 50 ... Pump (Fluid supply and discharge control unit), 60 ... Rotary joint (Bearing), 70 ... Honeycomb structure, 80 ... Holding unit, 90 ... Cross roller bearing (Bearing), 100 ... plugging device, and 170 ... Mask.

## Claims

1. A plugging device (100) comprising:
a body (10) that has a depressed portion (10d) and a communication path (10e) opened to an inner surface of the depressed portion (10d);
an elastic plate (20) arranged at the body (10) so as to cover the depressed portion (10d);
a bearing (60) that supports the body (10) rotatably around an axis; and
a rotary drive unit (40) that rotates the body around the axis.

2. The plugging device (100) according to Claim 1, wherein the axis is a vertical axis.

3. The plugging device (100) according to Claim 1, wherein the axis is an axis inclined to a vertical, or a horizontal axis

4. The plugging device (100) according to any one of Claims 1 to 3, wherein the axis intersects with a bottom surface (10c) of the depressed portion (10d).

5. The plugging device (100) according to any one of Claims 1 to 3, wherein the axis intersects with a center of the bottom surface (10c) of the depressed portion (10d).

6. The plugging device (100) according to Claim 4 or 5, wherein the axis intersects with the bottom surface (10c) of the depressed portion (10d) at a right angle.

7. The plugging device (100) according to any one of Claims 1 to 6, further comprising a pipe (14) that extends along the axis and is connected to the communication path (10e), wherein the bearing (60) is a rotary joint connected to the pipe (14).

8. The plugging device (100) according to Claim 7, further comprising a fluid supply and discharge control unit (50) that is connected to the rotary joint (60), and controls supply of a fluid to the depressed portion (10d) and discharge of the fluid from the depressed portion through the pipe (14) and the communication path (10e).

9. The plugging device (100) according to any one of Claims 1 to 8, further comprising an auxiliary bearing (90) that is fixed to the body (10), and supports the body (10) rotatably around the axis.

10. The plugging device (100) according to any one of Claims 1 to 9, wherein the elastic plate (20) is a rubber plate.

11. A method for producing a honeycomb structure (70) that has a plurality of through holes (70a) whose ends have been sealed, the method comprising the steps of:
preparing an elastic plate (20) arranged so as to cover a depressed portion (10d) with respect to a body (10) that has the depressed portion (10d) and a communication path (10e) opened to an inner surface of the depressed portion (10d);
forming a depressed portion of the elastic plate (20) by discharging a fluid in the depressed portion (10d) through the communication path (10e);
supplying a plugging material (130) in the depressed portion (10d) of the elastic plate (20);
rotating around an axis the body (10) to which the plugging material (130) has been supplied;
arranging one end surface of the honeycomb structure (70) that has the plurality of through holes (70a), at a position opposed to the depressed portion (10d); and
after the step of rotating, moving the elastic plate (20) toward the one end surface of the honeycomb structure (70) by supplying a fluid between the body (10) and the elastic plate (20) through the communication path (10e).

12. The method according to Claim 11, wherein the axis is a vertical axis.

13. The method according to Claim 11, wherein the axis is an axis inclined to a vertical, or a horizontal axis.

14. The method according to any one of Claims 11 to 13, wherein the axis intersects with a bottom surface of the depressed portion (10d).

15. The method according to any one of Claims 11 to 14, wherein the axis intersects with a center of the bottom surface of the depressed portion (10d).

16. The method according to Claim 14 or 15, wherein the axis intersects with the bottom surface of the depressed portion (10d) at a right angle.

## Patentansprüche

1. Verschlussvorrichtung (100), die aufweist:
einen Körper (10), der einen vertieften Abschnitt (10d) und einen Kommunikationsweg (10e) hat, der zu einer Innenfläche des vertieften Abschnitts (10d) geöffnet ist;
eine elastische Platte (20), die am Körper (10) so angeordnet ist, dass sie den vertieften Abschnitt (10d) abdeckt;
ein Lager (60), das den Körper (10) um eine Achse drehbar stützt; und
eine Drehantriebseinheit (40), die den Körper um die Achse dreht.

2. Verschlussvorrichtung (100) nach Anspruch 1, wobei die Achse eine senkrechte Achse ist.

3. Verschlussvorrichtung (100) nach Anspruch 1, wobei die Achse eine zu einer Senkrechten geneigte Achse oder eine waagerechte Achse ist.

4. Verschlussvorrichtung (100) nach einem der Ansprüche 1 bis 3, wobei die Achse eine Bodenfläche (10c) des vertieften Abschnitts (10d) schneidet.

5. Verschlussvorrichtung (100) nach einem der Ansprüche 1 bis 3, wobei die Achse eine Mitte der Bodenfläche (10c) des vertieften Abschnitts (10d) schneidet.

6. Verschlussvorrichtung (100) nach Anspruch 4 oder 5, wobei die Achse die Bodenfläche (10c) des vertieften Abschnitts (10d) in einem rechten Winkel schneidet.

7. Verschlussvorrichtung (100) nach einem der Ansprüche 1 bis 6, die ferner ein Rohr (14) aufweist, das sich entlang der Achse erstreckt und mit dem Kommunikationsweg (10e) verbunden ist, wobei das Lager (60) ein mit dem Rohr (14) verbundenes Drehgelenk ist.

8. Verschlussvorrichtung (100) nach Anspruch 7, die ferner eine Fluidzufuhr- und -abgabesteuereinheit (50) aufweist, die mit dem Drehgelenk (60) verbunden ist und die Zufuhr eines Fluids zum vertieften Abschnitt (10d) sowie die Abgabe des Fluids aus dem vertieften Abschnitt über das Rohr (14) und den Kommunikationsweg (10e) steuert.

9. Verschlussvorrichtung (100) nach einem der Ansprüche 1 bis 8, die ferner ein Hilfslager (90) aufweist, das am Körper (10) befestigt ist und den Körper (10) um die Achse drehbar stützt.

10. Verschlussvorrichtung (100) nach einem der Ansprüche 1 bis 9, wobei die elastische Platte (20) eine Gummiplatte ist.

11. Verfahren zur Herstellung einer Wabenstruktur (70), die mehrere Durchgangslöcher (70a) hat, deren Enden abgedichtet wurden, wobei das Verfahren die Schritte aufweist:
Vorbereiten einer elastischen Platte (20), die so angeordnet wird, dass sie einen vertieften Abschnitt (10d) im Hinblick auf einen Körper (10), der den vertieften Abschnitt (10d) hat, und einen Kommunikationsweg (10e) abdeckt, der zu einer Innenfläche des vertieften Abschnitts (10d) geöffnet ist;
Bilden eines vertieften Abschnitts der elastischen Platte (20) durch Abgeben eines Fluids über den Kommunikationsweg (10e) in den vertieften Abschnitt (10d);
Zuführen eines Verschlussmaterials (130) in den vertieften Abschnitt (10d) der elastischen Platte (20);
um eine Achse erfolgendes Drehen des Körpers (10), dem das Verschlussmaterial (130) zugeführt wurde;
Anordnen einer Endfläche der Wabenstruktur (70), die die mehreren Durchgangslöcher (70a) hat, an einer Position entgegengesetzt zum vertieften Abschnitt (10d); und
nach dem Schritt des Drehens erfolgendes Bewegen der elastischen Platte (20) zu der einen Endfläche der Wabenstruktur (70) durch Zuführen eines Fluids zwischen dem Körper (10) und der elastischen Platte (20) über den Kommunikationsweg (10e).

12. Verfahren nach Anspruch 11, wobei die Achse eine senkrechte Achse ist.

13. Verfahren nach Anspruch 11, wobei die Achse eine zu einer Senkrechten geneigte Achse oder eine waagerechte Achse ist.

14. Verfahren nach einem der Ansprüche 11 bis 13, wobei die Achse eine Bodenfläche des vertieften Abschnitts (10d) schneidet.

15. Verfahren nach einem der Ansprüche 11 bis 14, wobei die Achse eine Mitte der Bodenfläche des vertieften Abschnitts (10d) schneidet.

16. Verfahren nach Anspruch 14 oder 15, wobei die Achse die Bodenfläche des vertieften Abschnitts (10d) in einem rechten Winkel schneidet.

## Revendications

1. Dispositif de bouchage(100) comprenant :
un corps (10) qui présente une portion en creux (10d) et une trajectoire de communication (10e) ouverte vers une surface interne de la portion en creux (10d) ;
une plaque élastique (20) disposée sur le corps (10) afin de recouvrir la portion en creux (10d) ;
un palier (60) qui supporte le corps (10) en pouvant tourner autour d'un axe ; et
une unité de commande rotative (40) qui fait tourner le corps autour de l'axe.

2. Dispositif de bouchage(100) selon la revendication 1, dans lequel l'axe est un axe vertical.

3. Dispositif de bouchage(100) selon la revendication 1, dans lequel l'axe est un axe incliné par rapport à une verticale, ou un axe horizontal.

4. Dispositif de bouchage(100) selon l'une quelconque des revendications 1 à 3, dans lequel l'axe coupe une surface de fond (10c) de la portion en creux (10d).

5. Dispositif de bouchage(100) selon l'une quelconque des revendications 1 à 3, dans lequel l'axe coupe un centre de la surface de fond (10c) de la portion en creux (10d).

6. Dispositif de bouchage(100) selon la revendication 4 ou 5, dans lequel l'axe coupe la surface de fond (10c) de la portion en creux (10d) à un angle droit.

7. Dispositif de bouchage(100) selon l'une quelconque des revendications 1 à 6, comprenant de plus un tuyau (14) qui s'étend le long de l'axe et qui est connecté à la trajectoire de communication (10e), dans lequel le palier (60) est un joint rotatif connecté au tuyau (14).

8. Dispositif de (100) selon la revendication 7, comprenant de plus une alimentation en fluide et une unité de contrôle de décharge (50) qui est connectée au joint rotatif (60), et qui contrôle l'alimentation en un fluide dans la portion en creux (10d) et la décharge du fluide à partir de la portion en creux à travers le tuyau (14) et la trajectoire de communication (10e).

9. Dispositif de bouchage(100) selon l'une quelconque des revendications 1 à 8, comprenant de plus un palier auxiliaire (90) qui est fixé au corps (10), et qui supporte le corps (10) en pouvant tourner autour de l'axe.

10. Dispositif de bouchage(100) selon l'une quelconque des revendications 1 à 9, dans lequel la plaque élastique (20) est une plaque de caoutchouc.

11. Procédé de production d'une structure en nid d'abeilles (70) qui présente plusieurs trous de passage (70a) dont les extrémités ont été scellées, le procédé comprenant les étapes :
de préparation d'une plaque élastique (20) disposée afin de recouvrir une portion en creux (10d) par rapport à un corps (10) qui présente la portion en creux (10d) et une trajectoire de communication (10e) ouverte vers une surface interne de la portion en creux (10d) ;
de formation d'une portion en creux de la plaque élastique (20) par décharge d'un fluide dans la portion en creux (10d) à travers la trajectoire de communication (10e) ;
d'introduction d'un matériau de bouchage(130) dans la portion en creux (10d) de la plaque élastique (20) ;
de rotation autour d'un axe du corps (10) dans lequel le matériau de bouchage( 130) a été introduit ;
de disposition d'une surface d'extrémité de la structure en nid d'abeilles (70) qui présente les plusieurs trous de passage (70a), à une position opposée à la portion en creux (10d) ; et
après l'étape de rotation, le déplacement de la plaque élastique (20) vers la une surface d'extrémité de la structure en nid d'abeilles (70) par introduction d'un fluide entre le corps (10) et la plaque élastique (20) à travers la trajectoire de communication (10e).

12. Procédé selon la revendication 11, dans lequel l'axe est un axe vertical.

13. Procédé selon la revendication 11, dans lequel l'axe est un axe incliné par rapport à une verticale, ou un axe horizontal.

14. Procédé selon l'une quelconque des revendications 11 à 13, dans lequel l'axe coupe une surface de fond de la portion en creux (10d).

15. Procédé selon l'une quelconque des revendications 11 à 14, dans lequel l'axe coupe un centre de la surface de fond de la portion en creux (10d).

16. Procédé selon la revendication 14 ou 15, dans lequel l'axe coupe la surface de fond de la portion en creux (10d) à un angle droit.
